# EUROPÄISCHE PATENTSCHRIFT

(11) **EP 3 025 451 B1**
(45) Veröffentlichungstag und Bekanntmachung des Hinweises auf die Patenterteilung: **19.07.2017**
(21) Anmeldenummer: 14744508.4
(22) Anmeldetag: 22.07.2014
(51) Int. Cl.: H04L 12/24, H04L 12/26, H04L 12/40

(54) **ÜBERWACHUNG UND DIAGNOSE EINES STEUERGERÄTES**
MONITORING AND DIAGNOSIS OF A CONTROL DEVICE
SURVEILLANCE ET DIAGNOSTIC D'UN APPAREIL DE COMMANDE

(30) Priorität: 25.07.2013 DE 102013214577
(43) Veröffentlichungstag der Anmeldung: 01.06.2016
(73) Patentinhaber: Continental Automotive GmbH, 30165 Hannover (DE)
(72) Erfinder: ZINNER, Helge, 98646 Straufhain (DE); PÖLLER, Bruno, 92331 Parsberg (DE)
(86) Internationale Anmeldenummer: PCT/EP2014/065670
(87) Internationale Veröffentlichungsnummer: WO 2015/011117

(56) Entgegenhaltungen:
- EP-A1- 2 335 981
- US-A1- 2007 233 858
- US-A1- 2012 136 666

## Beschreibung

Die Erfindung betrifft ein Verfahren, ein Computerprogramm und ein computerlesbares Medium zum Überwachen eines Steuergerätes eines Fahrzeugs. Die Erfindung betrifft auch ein Steuergerät für ein Fahrzeug und ein Diagnosesystem.

Während des Betriebes eines Kraftfahrzeugs (Pkw, Lkw, Bus, Motorrad) ist es vorteilhaft, den Zustand der Steuergeräte und des Netzwerkes, über das die Steuergeräte kommunizieren, zu kennen. Dafür gibt es Diagnosegeräte, um die Kommunikation auf den unterschiedlichen Bussystemen, wie beispielsweise CAN, FlexRay, LIN, MOST und Ethernet, mitzulesen und Steuergeräte abzufragen. Hierfür kann der Überbegriff Diagnose verwendet werden.

Gerade während der Entwicklung von Steuergeräten kann es notwendig sein, die Kommunikation zu überwachen. Hierzu werden von Herstellern umfangreiche Werkzeuge angeboten. Für Ethernet stehen noch wenige Werkzeuge zur Verfügung, da eine Vernetzung von Steuergeräten mit Ethernet im Moment wenig verbreitet ist.

Diagnosegeräte im Automobilbereich sind in der Regel sehr teuer und können mehrere tausend Eurokosten und können nicht an jedem Arbeitsplatz zur Verfügung gestellt werden. Je mehr mit den vorhandenen Möglichkeiten gemacht werden kann, desto günstiger wird damit die Entwicklung der Steuergeräte. Dies hat letztendlich Auswirkung auf das letztendliche Produkt und damit auch auf das Kraftfahrzeug.

Zur Übertragung von Standard-Ethernet kann eine RJ45-Buchse genutzt werden, um CAT5e-Kabel einzustecken und Endgeräte miteinander zu verbinden. Diese Buchsen bieten eine grüne und eine gelbe LED, welche verschiedene Netzwerk-Status anzeigen können. Die angezeigten Status sind standardisiert und bei jeder Buchse (verbaut in PCs, Laptops, Server, ...) gleich. Diese LEDs sind auch bei der speziellen Ethernet-Variante BroadR-Reach möglich, welche aber eine andere Buchse verwendet.

Die grüne LED (Netzwerkgeschwindigkeit) gibt einen Status über die Geschwindigkeit der Ethernet-Verbindung zurück und leuchtet erst, wenn ein gegenüberliegender Kommunikationspartner verbunden ist. Die gelbe LED (Link Aktivität) gibt einen Status darüber, ob eine Kommunikationsbeziehung besteht und ob Daten übertragen werden. Diese LEDs hängen direkt am Ethernet-PHY (physical transceiver).

Diese Buchsen werden im Automobil normalerweise nicht verwendet, da sie von der Baugröße und von EMV-Eigenschaften meist ungeeignet sind. Jedoch können die LEDs auch separat auf die Steuergeräte gesetzt werden, da jeder PHY die Ausgänge für die LEDs zur Verfügung stellt, unabhängig davon, welches Kabel und welcher Stecker für die Ethernet-Technologie verwendet werden.

Im Automobil wird Ethernet mit einer Datenrate von 100 Mbit/s zum Einsatz kommen - eine weitere Geschwindigkeitsstufe wird in absehbarer Zeit (voraussichtlich bis 2019) nicht zum Einsatz kommen und zudem dann auch nicht alle bestehenden Systeme mit 100 Mbit/s ersetzen. Die entsprechende Status-LED hat somit keinen Zugewinn.

Weitere Statusmeldungen der Ethernet-Verbindung können nicht gewonnen werden. Hier muss auf zusätzliches Equipment zurückgegriffen werden oder zusätzliche Hardware beschafft werden. EP2335981 offenbart ein Steuergerät eines Fahrzeugs, das Diagnosedaten über ein Ethernet-Datennetz übertragt.

US2012/0136666 offenbart ein Steuergerät eines Fahrzeugs mit einem Ausgang, der an eine Diagnose-LED angeschlossen ist.

WO2012/139558 offenbart ein Steuergerät eines Fahrzeugs mit einer Überwachungseinrichtung und einem Ethernet-Treiber. Bei Erfassung eines Fehlers durch die Überwachungseinrichtung wird eine Signalspannung am Ausgang der Überwachungseinrichtung geführt. Infolge dieser Signalspannung wird der Reset-Eingang des Ethernet-Treibers derart gesteuert, dass der EthernetTreiber die Ethernet-Kommunikation des Steuergeräts unterbricht. Es ist Aufgabe der Erfindung, das Testen, das Überwachen und die Diagnose eines Steuergerätes mit Ethernet-Anschluss einfach und kostengünstig auszugestalten.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft ein Verfahren zum Überwachen eines Steuergerätes eines Fahrzeugs.

Das Steuergerät kann mit anderen Steuergeräten kommunizieren und umfasst dazu einen Ethernet-Transceiver. Beispiele für ein derartiges Steuergerät, bei dem Ethernet eingesetzt wird, sind eine Kamera, ein Radio, ein Verstärker und andere Steuergeräte im Fahrzeug, bei denen große Datenmengen transportiert werden.

Der Ethernet-Transceiver umfasst standardmäßig einen Link-LED-Ausgang, der zum Anzeigen des Netzwerk-Status einer Ethernet-Verbindung mittels einer daran anschließbaren LED (Leuchtdiode) ausgeführt ist. In der Regel umfasst ein Ethernet-Transceiver zwei Link-LED-Ausgänge bzw. Ausgänge, an die Leuchtdioden anschließbar sind, die über die Ethernet-Verbindung "Link" Auskunft geben. Der erste Link-LED-Ausgang gibt dabei über die Aktivität der Verbindung Auskunft(AN = Link aktiv, AUS = Link inaktiv, BLINKEND = Netzwerkaktivität). Der zweite Link-LED-Ausgang zeigt die Netzwerkgeschwindigkeit an (AN = 100 Mbit/s, AUS = 10 MBit/s).

Gemäß einer Ausführungsform der Erfindung umfasst das Verfahren:
- Ermitteln eines einstellbaren Diagnosezustands des Steuergeräts;
- Auswählen einer Signalfolge basierend auf dem Diagnosezustand und
- Ansteuern des Link-LED-Ausgangs mit der Signalfolge zum Ausgeben des Diagnosezustands.

Der einstellbare Diagnosezustand kann beispielsweise ein Diagnosezustand der Ethernet-Verbindung sein, beispielsweise wieviele Daten gerade versendet und/oder empfangen werden, ob Fehler aufgetreten sind, ob fehlerhafte Datenpakete empfangen wurden, usw..

Beispielsweise ist es wünschenswert zu sehen, ob:
- Pakete am Port der Ethernet-Verbindung verworfen werden,
- fehlerhafte Pakete empfangen werden,
- Strom über die Leitung mit übertragen wird,
- BroadR-Reach Master/Slave Konfiguration besteht,
- Daten transportiert werden, und/oder
- die maximale Auslastung erreicht ist.
Ein entsprechender Diagnosezustand kann im Steuergerät eingestellt werden.

Auch kann der Diagnosezustand ein Zustand sein, der die Funktion des Steuergerätes betrifft, beispielsweise, ob im Steuergerät ein Fehler aufgetreten ist.

Der Ethernet-Transceiver umfasst in der Regel einen PHY (physikalischer Transceiver) und einen MAC, wobei der PHY Hardware-Register aufweist, die über MAC (beispielweise, um die Geschwindigkeit der Verbindung einzustellen) von einem Controller beschrieben werden. Der PHY kann auch ein Register aufweisen, über den der Zustand der LED bzw. des LED-Ausgangs gesetzt werden kann (AN/AUS). Durch Beschreiben dieses Registers kann ein im Steuergerät ausgeführtes Programm den Link-LED-Ausgangs-Pin ansteuern und setzen.

Die vorgeschlagene Lösung ermöglicht auch eine sehr einfache Möglichkeit für eine erweiterte Fehlersuche. Durch eine individuelle Programmierung der LED können so eine Vielzahl von Funktionen und Zuständen des PHYs, des MACs und/oder des Steuergerätes durch die LED sehr einfach sichtbar gemacht werden. Die günstige Möglichkeit zur Anzeige von ausgewählten Funktionen kann die Anschaffung von zusätzlichen Geräten einsparen, da Fehler schon auf dieser Ebene signalisiert werden können. Hierdurch wird die Fehlersuche beschleunigt durch eine sekundenschnelle Erkennung von Zuständen.

Das Potential der LEDs bringt nahezu jeder PHY mit und kann hierdurch ohne Zusatzkosten genutzt werden. Hierzu kann die Standard-Hardware genutzt werden, es sind lediglich Software-Änderungen erforderlich.

Gemäß einer Ausführungsform der Erfindung kodiert die Signalfolge sich in einem Muster wiederholender An-/Aus-Zustände des Link-LED-Ausgangs. Beispielsweise können Zahlen oder Ziffern dadurch kodiert werden, dass der Link-LED-Ausgang der Zahl oder Ziffer entsprechend in Pulsen an- und ausgeschaltet wird, dann eine Pause eingelegt wird, die länger als eine Pause zwischen den Pulsen ist, und dann die Pulsfolge wiederholt wird.

Gemäß einer Ausführungsform der Erfindung ist der Link-LED-Ausgang dazu ausgeführt, an eine mehrfarbige LED angeschlossen zu werden, d. h. an eine LED, bei der verschiedene Farben eingestellt werden können. Beispielsweise kann über den Link-LED-Ausgang nicht nur ein An-/Aus-Signal abgegeben werden, sondern auch mehrere An-/Aus-Signale, die Farben einer farbigen LED kodieren. In diesem Fall kann die Signalfolge auch Farben kodieren. Beispielsweise kann die Farbe Rot einen Fehler und die Farbe Grün einen ordnungsgemäßen Betrieb anzeigen.

Gemäß einer Ausführungsform der Erfindung umfasst das Verfahren weiter:
- Durchführen eines Selbsttests (als Diagnosezustand) des Steuergerätes und
- Auswahl der Signalfolge abhängig von einem ermittelten Fehlerzustand.

Beispielsweise kann vor dem Einbau des Fahrzeuges ein Selbsttest durchgeführt werden, bei dem das Ergebnis über den Link-LED-Ausgang an ein Diagnosegerät ausgegeben wird.

Gemäß einer Ausführungsform der Erfindung umfasst das Verfahren weiter:
- Erfassen von Signalen aus dem Link-LED-Ausgang mit einem Diagnosegerät und
- Auswerten der erfassten Signale, um den Diagnosezustand zu bestimmen.
Es ist nicht nur möglich, dass die Diagnoseergebnisse mit einer an den Link-LED-Ausgang angeschlossenen LED visuell von einer Person ausgewertet werden, sondern, dass die vom Link-LED-Ausgang abgegebenen Signale von einem Diagnosegerät erfasst und ausgewertet werden. Auf diese Weise können auch komplexere Signale ausgewertet werden.

Gemäß einer Ausführungsform der Erfindung werden elektrische Signale aus dem Link-LED-Ausgang durch das Diagnosegerät erfasst, das beispielsweise direkt an den Link-LED-Ausgang angeschlossen werden kann, auch wenn daran keine LED angeschlossen ist, wie es in der Regel der Fall ist, wenn das Steuergerät im Fahrzeug verbaut ist.

Gemäß einer Ausführungsform der Erfindung werden vom Diagnosegerät optische Signale erfasst, die von einer LED erzeugt werden, die an den Link-LED Ausgang angeschlossen ist. Dazu kann das Diagnosegerät beispielsweise eine Kamera oder einen lichtempfindlichen Sensor umfassen.

Ein weiterer Aspekt der Erfindung betrifft ein Computerprogramm, das, wenn es auf einem Prozessor ausgeführt wird, den Prozessor anleitet, die Schritte des Verfahrens, so wie obenstehend und untenstehend beschrieben, durchzuführen. Beispielsweise können das Steuergerät und/oder der Ethernet-Transceiver diesen Prozessor oder jeweils einen Prozessor aufweisen, der oder die dieses Computerprogramm ausführen.

Ein weiterer Aspekt der Erfindung betrifft ein computerlesbares Medium, auf dem ein solches Computerprogramm gespeichert ist. Ein computerlesbares Medium kann dabei ein nicht-flüchtiger Speicher des Steuergerätes sein. Beispiele für computerlesbare Medien sind RAM-, ROM-, FLASH-Speicher, Festplatten, CDs, DVDs oder Disketten.

Ein weiterer Aspekt der Erfindung betrifft ein Steuergerät für ein Fahrzeug, wobei das Steuergerät einen Ethernet-Transceiver mit einem Link-LED-Ausgang umfasst, der zum Anzeigen des Netzwerk-Status mittels daran anschließbarer LEDs ausgeführt ist, und wobei das Steuergerät dazu ausgeführt ist, einen internen Diagnosezustand zu ermitteln, eine Signalfolge basierend auf dem Diagnosezustand auszuwählen und den Link-LED-Ausgang mit der Signalfolge zum Ausgeben des Diagnosezustands anzusteuern.

Ein weiterer Aspekt der Erfindung betrifft ein Diagnosesystem, das ein Steuergerät, so wie es obenstehend und untenstehend beschrieben ist, und ein Diagnosegerät mit einem Lesegerät, das dazu ausgeführt ist, Signale aus dem Link-LED-Ausgang zu erfassen, umfasst. Beispielsweise kann das Lesegerät einen Stecker umfassen, der an eine Schnittstelle des Steuergerätes angeschlossen werden kann, an der auch die Link-LED-Ausgänge angeschlossen sind. Das Diagnosegerät kann also direkt über die Spannung an den Link-LED-Ausgängen ermitteln, welche Signalfolge gerade vom Steuergerät über diese Ausgänge ausgegeben wird.

Gemäß einer Ausführungsform der Erfindung ist das Lesegerät dazu ausgeführt, optische Signale zu erfassen. Es ist auch möglich, dass das Lesegerät eine Kamera oder einen lichtempfindlichen Sensor umfasst, die oder der im Falle dessen, dass eine LED an den Link-LED-Ausgang angeschlossen ist, das von der LED abgegebene Licht auswertet.

Es ist zu verstehen, dass Merkmale des Verfahrens, so wie obenstehend und untenstehend beschrieben, auch Merkmale des Steuergerätes bzw. des Diagnosesystems sein können und umgekehrt.

Ein weiterer Aspekt der Erfindung betrifft das Verwenden eines Link-LED-Ausgangs eines Ethernet-Transceivers eines Steuergerätes für ein Fahrzeug zum Ausgeben eines Diagnosezustandes des Steuergerätes.

Im Folgenden werden Ausführungsbeispiele der Erfindung mit Bezug auf die beiliegenden Figuren detailliert beschrieben. Es zeigen:
- Fig. 1: ein Diagnosesystem gemäß einer Ausführungsform der Erfindung,
- Fig. 2: ein Diagnosesystem gemäß einer weiteren Ausführungsform der Erfindung,
- Fig. 3: ein Flussdiagramm für ein Verfahren zum Überwachen eines Steuergerätes gemäß einer Ausführungsform der Erfindung.

Grundsätzlich sind identische oder ähnliche Teile mit den gleichen Bezugszeichen versehen.

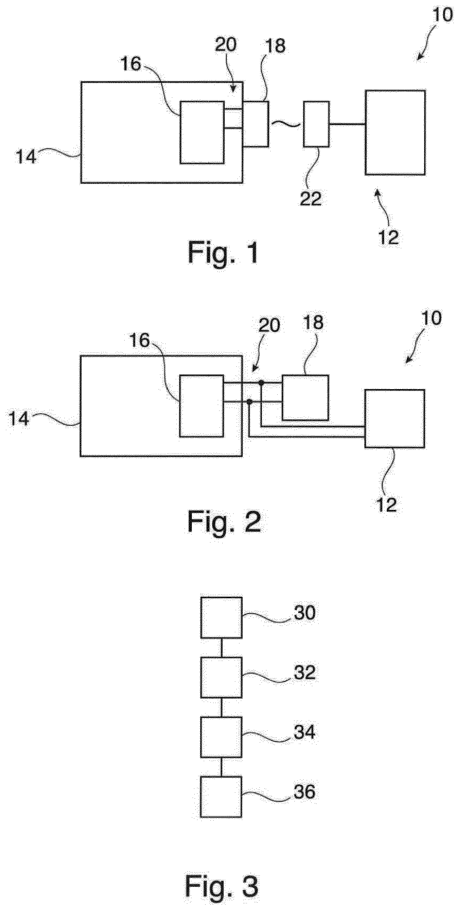

Fig. 1 zeigt ein Diagnosesystem 10, das ein Diagnosegerät 12 und ein Steuergerät 14 für ein Fahrzeug (wie etwa ein Radio, ein Bordcomputer, ein Verstärker, eine Motorsteuerung, ein Fensterheber, usw.) umfasst.

Das Steuergerät 14 umfasst einen Ethernet-Transceiver 16, an dem eine LED 18 angeschlossen ist. Der Ethernet-Transceiver 16 weist in der Regel einen Ethernet-PHY (physical transceiver) und einen Ethernet-MAC (Media Access Controller) auf. Ein Ethernet-PHY weist zwei Link-LED-Ausgänge 20 auf, über die die oben beschriebenen Standard-Status ausgegeben werden können. Diese Link-LED-Ausgänge 20 werden standardgemäß durch die Funktionen Linkaktivität und Datenrate (10/100/1000) angesteuert. Ethernet-Transceiver 16 bzw. der PHY besitzt auch einen zusätzlichen Eingang, um die LED 18 an- und auszuschalten. Beispielsweise über diesen Eingang können die Link-LED-Ausgänge 20 angesteuert werden.

Die Link-LED 18 bzw. der Link-LED-Ausgang 20 (oder auch beide LEDs bzw. Ausgänge) werden vom Steuergerät 14 zum Ausgeben bzw. Anzeigen weiterer Daten verwendet. Durch eine individuelle Programmierung können so Informationen aus dem Steuergerät 14, aus dem Ethernet-PHY und/oder dem Ethernet-MAC über den Link-LED-Ausgang 20 ausgegeben und/oder über die LED 18 signalisiert werden.

Alternativ oder zusätzlich zu dem oben genannten Eingang können hierzu bestimmte Register im Ethernet-PHY beschrieben werden, die das Leuchten der LED 18 verursachen.

Ist die LED 18 angeschlossen, kann beispielsweise ein Entwickler visuell die LED 18 (oder die beiden LEDs) auswerten und Schlüsse daraus ziehen.

Alternativ oder zusätzlich kann das Diagnosegerät 12 ein Lesegerät 22 in der Form eines lichtempfindlichen Sensors oder einer Kamera aufweisen, um Signale von der LED 18 zu erfassen. Das Lesegerät 22 ist damit dazu ausgeführt, optische Signale von der LED 18 zu erfassen und auszuwerten.

Die Fig. 2 zeigt ein weiteres Diagnosesystem 10, bei dem das elektrische Signal an dem Link-LED-Ausgang 20 von dem Diagnosegerät 12 abgegriffen wird. Dazu kann beispielsweise ein Stecker am Steuergerät 14 vorhanden sein, indem ein entsprechender Stecker des Diagnosegerätes 12 eingesteckt werden kann. Der oder die Link-LED-Ausgänge 20 können im Allgemeinen an eine Diagnoseverbindung oder eine Recheneinheit angeschlossen werden, welche die Signale dann auswertet.

Die LED 18 (oder beide LEDs) werden aus Kosten- und Sicherheitsgründen normalerweise nicht im Fahrzeug verbaut (können zu Diagnosezwecken aber während der Entwicklung oder einer Testphase angeschlossen sein). Die elektrischen Signale, welche die LED 18 antreiben, können durch Abgreifen der Signale an dem Link-LED Ausgang 20 auch genutzt werden, wenn keine LED 18 angeschlossen ist.

Die Fig. 3 zeigt ein Flussdiagramm für ein Verfahren, das mit dem Diagnosesystem 10, 10' durchgeführt werden kann. Dabei werden die Schritte 30 bis 34 von dem Steuergerät 14 und der optionale Schritt 36 von dem Diagnosegerät 12 durchgeführt.

Im Schritt 30 ermittelt das Steuergerät 14 einen einstellbaren Diagnosezustand, der beispielsweise beim Herstellen des Steuergerätes 14, beim Einbau des Steuergerätes 14 in das Fahrzeug oder während der Diagnose eingestellt werden kann.

Zum Beispiel kann als Diagnosezustand interessant sein und angezeigt werden:
- Welche Daten werden über die Ethernet-Verbindung transportiert? (beispielsweise zeitgesteuerte Daten oder Hintergrunddaten)
- Wird zusätzlich Strom über die Ethernet-Verbindung übertragen? (z. B. durch Power over Ethernet)
- Wurden Pakete an diesem Port verworfen?
- Wurden fehlerhafte Pakete empfangen?
- Besteht eine BroadR-Reach (Zweidraht-Technologie von Broadcom) Master/Slave-Konfiguration?
- Ist die maximale Auslastung der Ethernet-Verbindung erreicht?
- Ist ein Fehler auf Ethernet-Layer 1 oder ein Fehler auf Ethernet-Layer 2 vorhanden?
- Ist die MII-Verbindung defekt?

Im Schritt 32 wählt das Steuergerät 14 eine Signalfolge basierend auf dem Diagnosezustand aus.

Zum Beispiel kann zur Laufzeit eingestellt werden, dass die LED 18 blinken soll, wenn die versendete Datenrate ein Volumen von 50 Mbit/s übersteigt. Weiterhin wäre es auch möglich, die LED in dem Falle leuchten/blinken zu lassen, wenn fehlerhafte Pakete eintreffen.

Die Signalfolge kann auch ein Muster wiederholender An-/Aus-Zustände des Link-LED-Ausgangs (20) kodieren, d. h. über die einfachen Zustände "immer an", "immer aus" bzw. "blinkend" hinausgehen.

Beispielsweise über einen Blink-Code nach den Schemata eines Morsecodes könnten so spezifische Informationen ausgegeben werden. Dies kann durch individuelle Ansteuerung des Steuergerätes 14 des LED-Einganges (z. B. On Off Off Off On) programmiert werden. Wenn beispielsweise die aktuelle Datenrate abgefragt werden soll, so kann dies durch eine LED mit der Blinkcode-Sequenz (AN-AUS-AN-AUS *(schnell blinkend) - PAUSE -* AN-AUS-AN-AUS-AN-AUS-AN-AUS-AN-AUS-AN-AUS *(schnell blinkend)* signalisiert werden. Dies würde einer Datenrate von 26 Mbit/s entsprechen.

Auch der Link-LED-Ausgang 20 kann dazu ausgeführt sein, an eine farbige LED 18 angeschlossen zu werden. Beispielsweise kann die Nutzung einer Farb-LED während der Entwicklung dazu genutzt werden, um eine höhere Anzahl an Fehlerausgaben parallel auszugeben. So könnte beispielsweise über einen Farbcode "ROT" ein Fehler signalisiert werden.

Im Schritt 34 steuert das Steuergerät 14 den Link-LED-Ausgang 20 mit der Signalfolge an, um den Diagnosezustand am Link-LED-Ausgang 20 auszugeben.

Beispielsweise kann der Eingang An/Aus (ON/OFF), wie oben beschrieben, individuell dazu genutzt werden. Die LED 18 bzw. die LEDs können über diese Funktion bei Bedarf dann leuchtend, blinkend oder erloschen geschaltet werden.

Über ein entsprechendes Computerprogramm, das im Steuergerät 14 ausgeführt wird, können die Register des Ethernet-Transceivers 16 (bzw. dessen PHYs) während des Betriebes geändert werden. So können über die LED individuelle Signalfolgen ausgegeben werden.

Im Schritt 36 erfasst das Diagnosegerät 12 Signale aus dem Link-LED-Ausgang 20 und wertet die erfassten Signale aus, um den Diagnosezustand zu bestimmen.

Beispielsweise können elektrische Signale aus dem Link-LED-Ausgang 20 erfasst werden, um eine einfache Diagnosemöglichkeit bereitzustellen, wenn keine LEDs verbaut sind. Dies kann durch Abgriff der Leitung 20 geboten werden oder durch Bereitstellen eines Steckers. Hierzu sind keine Hardwareänderungen am Ethernet-PHY und dem Steuergerät 14 notwendig. Die abgegriffenen Signale entsprechen dem des LED-Zustandes.

Bei angeschlossener LED 18 können aber auch optische Signale erfasst und ausgewertet werden.

Beispielsweise kann während des Schritts 30 ein Selbsttest des Steuergerätes 14 durchgeführt werden und dann im Schritt 32 eine Signalfolge abhängig von einem ermittelten Fehlerzustand ausgewählt werden.

Jedes Steuergerät 14 wird normalerweise vor der Auslieferung oder dem Einbau in der EOL (End of Line Programmierung) final programmiert. Hierbei kommt ein In-Circuit-Test (ICT) zum Einsatz. Der ICT ist ein Prüfverfahren für elektronische Baugruppen und bestückte Leiterplatten in der Elektronikfertigung. Dabei wird die bestückte Leiterplatte, nachdem sie auf bzw. in einen speziellen Prüfadapter gelegt wurde, auf Fehler in der Leiterbahnführung (wie Kurzschlüsse oder Unterbrechungen), Lötfehler und Bauteilefehler geprüft. Auch ganze Schaltungsblöcke können getestet werden.

Unter Zuhilfenahme einer Testsoftware oder durch Auslösen von bestimmten Funktionen kann man eine detaillierte Fehlersuche bzw. Komponentenprüfung durchführen und die Fehlerursachen an der LED 18 bzw. dem Ausgang 20 ausgeben. Die Testsequenzen werden gestartet, und bei fehlerhaftem Verhalten wird ein Fehlergrund abgegriffen und vom Testrechner ausgewertet. Dies würde keine oder kaum zusätzliche Hardware und Analysewerkzeuge erfordern und kann die EOL beschleunigen und eine Fehlersuche bis zur Auslieferung ermöglichen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Überwachen eines Steuergerätes (14) eines Fahrzeugs, wobei das Steuergerät (14) einen Ethernet-Transceiver (16) umfasst, **dadurch gekennzeichnet, dass** der Ethernet-Transceiver einen Link-LED-Ausgang (20) umfasst, der zum Anzeigen des Netzwerk-Status mittels einer daran anschließbaren LED (18) ausgeführt ist, das Verfahren umfassend:
- Ermitteln eines einstellbaren Diagnosezustandes des Steuergerätes (14);
- Auswählen einer Signalfolge basierend auf dem Diagnosezustand;
- Ansteuern des Link-LED-Ausgangs (20) mit der Signalfolge zum Ausgeben des Diagnosezustandes.

2. Verfahren nach Anspruch 1, wobei die Signalfolge sich in einem Muster wiederholender An-/Aus-Zustände des Link-LED-Ausgangs (20) kodiert.

3. Verfahren nach Anspruch 1 oder 2, wobei der Link-LED-Ausgang (20) dazu ausgeführt ist, an eine farbige LED (18) angeschlossen zu werden; wobei die Signalfolge Farben kodiert.

4. Verfahren nach einem der vorhergehenden Ansprüche, weiter umfassend:
- Durchführen eines Selbsttests des Steuergerätes (14);
- Auswahl der Signalfolge abhängig von einem ermittelten Fehlerzustand.

5. Verfahren nach einem der vorhergehenden Ansprüche, weiter umfassend:
- Erfassen von Signalen aus dem Link-LED-Ausgang (20) mit einem Diagnosegerät (12);
- Auswerten der erfassten Signale, um den Diagnosezustand zu bestimmen.

6. Verfahren nach Anspruch 5, wobei elektrische Signale aus dem Link-LED-Ausgang (20) erfasst werden.

7. Verfahren nach Anspruch 5 oder 6, wobei optische Signale erfasst werden, die von einer LED (18) erzeugt werden, die an den Link-LED Ausgang (20) angeschlossen ist.

8. Computerprogramm, das, wenn es auf einem Prozessor ausgeführt wird, den Prozessor anleitet, die Schritte des Verfahrens nach einem der Ansprüche 1 bis 7 durchzuführen.

9. Computerlesbares Medium, auf dem ein Computerprogramm gemäß Anspruch 8 gespeichert ist.

10. Steuergerät (14) für ein Fahrzeug,
wobei das Steuergerät (14) einen Ethernet-Transceiver (16) umfasst, **dadurch gekennzeichnet, dass** der Ethernet-Transceiver einen Link-LED-Ausgang (20) umfasst, der zum Anzeigen des Netzwerk-Status mittels einer daran anschließbaren LED (18) ausgeführt ist;
wobei das Steuergerät (14) dazu ausgeführt ist, einen internen Diagnosezustand zu ermitteln, eine Signalfolge basierend auf dem Diagnosezustand auszuwählen und den Link-LED-Ausgang (20) mit der Signalfolge zum Ausgeben des Diagnosezustandes anzusteuern.

11. Diagnosesystem (10, 10'), umfassend:
- ein Steuergerät (14) nach Anspruch 10,
- ein Diagnosegerät (12) mit einem Lesegerät (22), das dazu ausgeführt ist, Signale aus dem Link-LED-Ausgang (20) zu erfassen.

12. Diagnosesystem nach Anspruch 11, wobei das Lesegerät (22) dazu ausgeführt ist, optische Signale zu erfassen.

13. Verwenden eines Link-LED-Ausgangs (20) eines Ethernet-Transceivers (16) eines Steuergerätes (14) für ein Fahrzeug gemäß Anspruch 10 zum Ausgeben eines Diagnosezustandes des Steuergerätes (14).

## Claims

1. Method for monitoring a control device (14) of a vehicle, wherein the control device (14) comprises an Ethernet transceiver (16, **characterized in that** the Ethernet transceiver comprises a link LED output (20), which is designed to display the network status by means of an LED (18) connectable thereto, the method comprising:
- determining a settable diagnosis state of the control device (14);
- selecting a signal sequence on the basis of the diagnosis state;
- controlling the link LED output (20) with the signal sequence to output the diagnosis state.

2. Method according to Claim 1, wherein the signal sequence is encoded in a pattern of repeating ON/OFF states of the link LED output (20).

3. Method according to Claim 1 or 2,
wherein the link LED output (20) is designed to be connected to a color LED (18);
wherein the signal sequence encodes colors.

4. Method according to one of the preceding claims, further comprising:
- carrying out a self-test of the control device (14);
- selecting the signal sequence depending on a determined fault state.

5. Method according to one of the preceding claims, further comprising:
- capturing signals from the link LED output (20) with a diagnosis device (12);
- evaluating the captured signals in order to determine the diagnosis state.

6. Method according to Claim 5, wherein electrical signals are captured from the link LED output (20).

7. Method according to Claim 5 or 6, wherein optical signals are captured which are generated by an LED (18) which is connected to the link LED output (20).

8. Computer program which, when it is executed on a processor, instructs the processor to carry out the steps of the method according to one of Claims 1 to 7.

9. Computer-readable medium on which a computer program according to Claim 8 is stored.

10. Control device (14) for a vehicle,
wherein the control device (14) comprises an Ethernet transceiver (16), **characterized in that** the Ethernet transceiver comprises a link LED output (20) which is designed to indicate the network status by means of an LED (18) connectable thereto;
wherein the control device (14) is designed to determine an internal diagnosis state, to select a signal sequence on the basis of the diagnosis state and to control the link LED output (20) with the signal sequence to output the diagnosis state.

11. Diagnosis system (10, 10'), comprising:
- a control device (14) according to claim 10,
- a diagnosis device (12) with a reading device (22) which is designed to capture signals from the link LED output (20).

12. Diagnosis system according to Claim 11, wherein the reading device (22) is designed to capture optical signals.

13. Use of a link LED output (20) of an Ethernet transceiver (16) of a control device (14) for a vehicle according to Claim 10 to output a diagnosis state of the control device (14).

## Revendications

1. Procédé pour surveiller un appareil de commande (14) d'un véhicule, dans lequel l'appareil de commande (14) comprend un émetteur-récepteur Ethernet (16), **caractérisé en ce que** l'émetteur-récepteur Ethernet comprend une sortie de LED de liaison (20) qui est conçue pour indiquer l'état du réseau au moyen d'une LED (18) pouvant lui être raccordée, le procédé consistant à :
- déterminer un état de diagnostic réglable de l'appareil de commande (14) ;
- sélectionner une série de signaux sur la base de l'état de diagnostic ;
- commander la sortie de LED de liaison (20) avec la série de signaux pour fournir en sortie l'état de diagnostic.

2. Procédé selon la revendication 1, dans lequel la série de signaux se code sous la forme d'une configuration d'états actifs/inactifs de la sortie de LED de liaison (20).

3. Procédé selon la revendication 1 ou 2,
dans lequel la sortie de LED de liaison (20) est conçue pour être raccordée à une LED colorée (18) ;
dans lequel la série de signaux code des couleurs.

4. Procédé selon l'une quelconque des revendications précédentes, consistant en outre à :
- effectuer un auto-test de l'appareil de commande (14) ;
- sélectionner la série de signaux en fonction d'un état d'erreur déterminé.

5. Procédé selon l'une quelconque des revendications précédentes, consistant en outre à :
- détecter des signaux provenant de la sortie de LED de liaison (20) au moyen d'un appareil de diagnostic (12) ;
- évaluer les signaux détectés pour déterminer l'état de diagnostic.

6. Procédé selon la revendication 5, dans lequel des signaux électriques sont détectés à partir de la sortie de LED de liaison (20).

7. Procédé selon la revendication 5 ou 6, dans lequel des signaux optiques générés par une LED (18) qui est raccordée à la sortie de LED de liaison (20) sont générés.

8. Programme d'ordinateur qui, lorsqu'il est exécuté sur un processeur, amène le processeur à exécuter les étapes du procédé selon l'une quelconque des revendications 1 à 7.

9. Support lisible par ordinateur sur lequel est stocké le programme d'ordinateur selon la revendication 8.

10. Appareil de commande (14) destiné à un véhicule,
dans lequel l'appareil de commande (14) comprend un émetteur-récepteur Ethernet (16), **caractérisé en ce que** l'émetteur-récepteur Ethernet comprend une sortie de LED de liaison (20) qui est conçue pour indiquer l'état du réseau au moyen d'une LED (18) pouvant lui être raccordée ;
dans lequel l'appareil de commande (14) est conçu pour déterminer un état de diagnostic interne, pour sélectionner une série de signaux sur la base de l'état de diagnostic et pour commander la sortie de LED de liaison (20) avec la série de signaux pour fournir en sortie l'état de diagnostic.

11. Système de diagnostic (10, 10'), comprenant :
- un appareil de commande (14) selon la revendication 10,
- un appareil de diagnostic (12) comportant un appareil de lecture (22) qui est conçu pour détecter des signaux provenant de la sortie de diode de liaison (20).

12. Système de diagnostic selon la revendication 11, dans lequel l'appareil de lecture (22) est conçu pour détecter des signaux optiques.

13. Utilisation d'une sortie de LED de liaison (20) d'un émetteur-récepteur Ethernet (16) d'un appareil de commande (14) destiné à un véhicule selon la revendication 10 pour fournir en sortie un état de diagnostic de l'appareil de commande (14).
